# EUROPEAN PATENT SPECIFICATION

(11) **EP 1 754 644 B1**
(45) Date of publication and mention of the grant of the patent: **18.08.2010**
(21) Application number: 05720623.7
(22) Date of filing: 11.03.2005
(51) Int. Cl.: B61L 27/00, B60L 15/40

(54) **TRAIN OPERATION CONTROL SYSTEM**
ZUGBETRIEBSSTEUERSYSTEM
SYSTÈME DE CONTRÔLE D`EXPLOITATION DE TRAIN

(30) Priority: 08.06.2004 JP 2004169994
(43) Date of publication of application: 21.02.2007
(73) Proprietor: MITSUBISHI DENKI KABUSHIKI KAISHA, Chiyoda-ku, Tokyo 100-8310 (JP)
(72) Inventor: KATAOKA, Kenji, Chiyoda-Ku, Tokyo 100-8310 (JP)
(74) Representative: Sajda, Wolf E.
(86) International application number: PCT/JP2005/004352
(87) International publication number: WO 2005/120926

(56) References cited:
- EP-A- 0 605 848
- JP-A- 10 329 718
- JP-A- 11 255 126
- JP-A- 2001 030 905
- US-A- 5 954 780

## Description

### Technical Field

The present invention relates to a train service control system in which when a train schedule is disrupted and a preceding train is shunted into a station, excessive deceleration of a following train is avoided, and a delay increase is avoided.

### Background Art

In a conventional train service control system, there has been a case in which when a preceding train scheduled to be shunted into a next station is delayed, a following train which is to pass the next station catches up with the preceding train, and with the deceleration of the preceding train for stopping at the next station, the following train must also be decelerated, and the train delay is further increased.
In patent document 1, in order to solve the problem as stated above, there is provided a method in which an on-board apparatus predictively calculates the route clearing time of a passing track occurring after a preceding train enters a next station as a shunting station, and a following train enters the section at the time and at high speed.

Patent document 1: JP-A-11-243609 (pages 4 to 8, Fig. 1)

The document US-A-5 954 780 discloses a method for generating a speed control code for a train which is intended to enhance the operational efficiency of the train, maximize the train line capacity, and enable a stable running of the train by detecting the speed of a preceding train and the distance between the preceding train and the next succeeding train of the preceding train and by generating a speed indication code corresponding to the speed of the preceding train. The conventional method for generating a speed control code for a train comprises: a first step for detecting a speed and a position of a preceding train and of a next succeeding train; a second step for generating a speed indication code for each of a plurality of intervening track intervals so that the next succeeding train can stop within a predetermined safety distance when an interval between the position of the preceding train detected in the first step and the position of the next succeeding train is within the previously set safety distance; and a third step for generating a speed indication code corresponding to the speed of the preceding train when the interval between the position of the preceding train detected in the first step and the position of the next succeeding train is longer than the previously set safety distance.

### Disclosure of the Invention

### Problems that the Invention is to Solve

In the conventional system of patent document 1, there have been problems that since the processing capacity of the on-board apparatus is not generally high, a high performance processing apparatus is required, and only expensive means is put to practical use as transmission means from the train to a ground apparatus.

The invention has been made to solve the foregoing problems, and has an object to obtain a train service control system in which an inexpensive on-board apparatus mounted in an existing system and transmission means are used, and when a train schedule is disrupted and a preceding train is shunted into a station, excessive deceleration of a following train is avoided and a delay increase can be avoided.

### Means for Solving the Problems

A train service control system of the invention includes a ground apparatus that predicts a track opening time of a station where a preceding train is shunted and transmits coasting information including section and speed information to a following train, and an on-board apparatus that coasts a train based on the coasting information transmitted from the ground apparatus; the ground apparatus includes train state estimation means for estimating a train state of a position and a speed of the shunted preceding train from drop and lifting information of a track circuit; train running prediction means for predicting, from the train state of the preceding train estimated by the train state estimation means, the track opening time when a track of the station where the preceding train is shunted is opened to a passing side for the following train; coasting information selection means for selecting, based on the track opening time predicted by the train running prediction means, coasting information of the following train from previously created coasting patterns so that the following train passes the track at high speed, and information transmission means for transmitting the coasting information selected by the coasting information selection means to the following train; and the on-board apparatus includes information reception means for receiving the coasting information transmitted by the information transmission means of the ground apparatus; and automatic train control means for coasting its train based on the coasting information received by the information reception means.

### Effects of the Invention

According to the invention, as described above, there are provided the ground apparatus that predicts the track opening time of the station where the preceding train is shunted and transmits the coasting information including the section and speed information to the following train; and the on-board apparatus that coasts the train based on the coasting information transmitted from the ground apparatus, the ground apparatus includes the train state estimation means for estimating the train state of the position and the speed of the shunted preceding train from the drop and lifting information of the track circuit, the train running prediction means for predicting, from the train state of the preceding train estimated by the train state estimation means, the track opening time when the track of the station where the preceding train is shunted is opened to the passing side for the following train; the coasting information selection means for selecting, based on the track opening time predicted by the train running prediction means, the coasting information of the following train from the previously created coasting patterns so that the following train passes the track at high speed; and the information transmission means for transmitting the coasting information selected by the coasting information selection means to the following train; and the on-board apparatus includes the information reception means for receiving the coasting information transmitted by the information transmission means of the ground apparatus; and the automatic train control means for coasting its train based on the coasting information received by the information reception means. Accordingly, there are effects that when the train schedule is disrupted, excessive deceleration of the following train due to the delay of the station shunting of the preceding train can be avoided without causing the on-board apparatus to have high performance, the following train can be made to run efficiently and at high speed, and the delay increase can be avoided.

### Best Mode for Carrying Out the Invention

### Embodiment 1

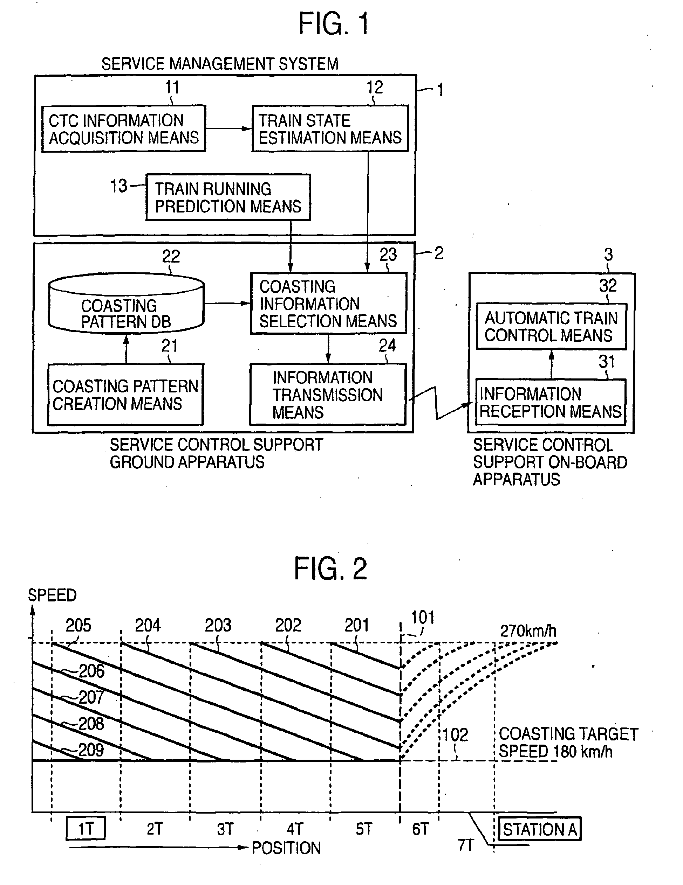

Fig. 1 is a structural view showing a train service control system according to Embodiment 1 of the invention.

In Fig. 1, in a service management system 1 (ground apparatus), based on information obtained from CTC information acquisition means 11, the train state of position and speed of a running train is estimated by train state estimation means 12, and at the same time, train running prediction means 13 predicts a running curve of the train for a definite time (generally, several tens minutes) and a track opening time when a track is opened to a passing side.

In a service control support ground apparatus 2 (ground apparatus), coasting information selection means 23 searches a coasting pattern DB (database) 22 previously created by coasting pattern creation means 21, while using the estimated present position and speed of the train and the track opening prediction information obtained by the train running prediction means 13 as keys, and selects coasting information. The obtained coasting information is transmitted from information transmission means 24 to the train through information reception means 31 of a service control support on-board apparatus 3 (on-board apparatus), and automatic train control means 32 controls a notch based on the transmitted coasting information and controls the train speed.

Fig. 2 is a view showing coasting patterns of a following train in the train service control system according to Embodiment 1 of the invention.

In Fig. 2, the horizontal axis indicates position, and the vertical axis indicates speed. Track circuits 1T to 7T, a coasting target position 101, and a coasting target speed 102 are shown.

Fig. 3 is a view showing constant speed - deceleration patterns in the train service control system according to Embodiment 1 of the invention.

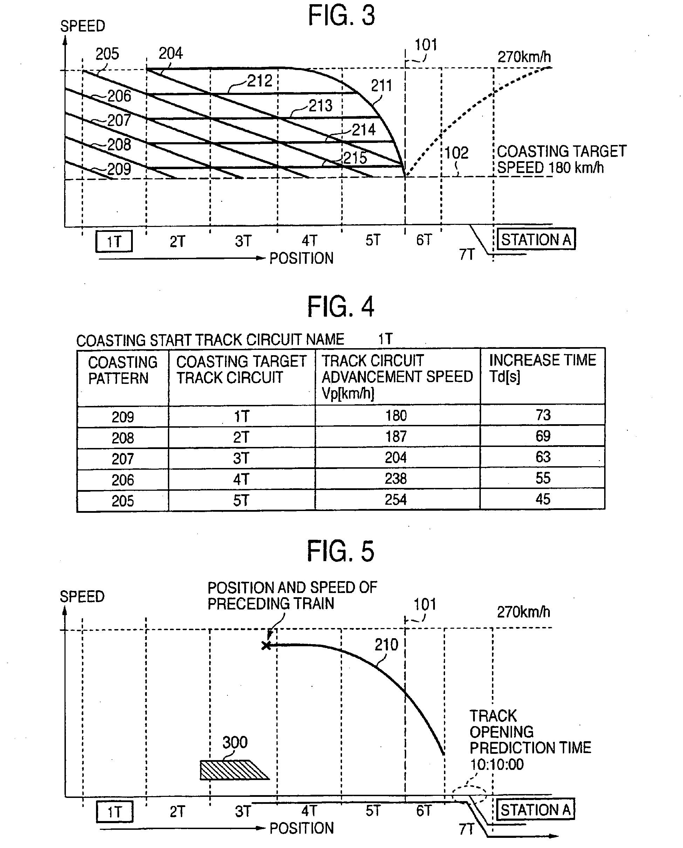

In Fig. 3, the horizontal axis indicates position, and the vertical axis indicates speed. Track circuits 1T to 7T, a coasting target position 101, and a coasting target speed 102 are shown.

Fig. 4 is a view showing an example of a coasting pattern DB indicating coasting patterns in the train service control system according to Embodiment 1 of the invention.

Fig. 5 is a view showing an example of a stop pattern of a preceding train in the train service control system according to Embodiment 1 of the invention.

In Fig. 5, the horizontal axis indicates position, and the vertical axis indicates speed. Track circuits 1T to 7T, and an information target position 101 are shown. A shunting rail line branches from a track at station A, and a preceding train 300 enters the shunting rail line as shown by a thick line arrow indicating the traveling direction of the train.

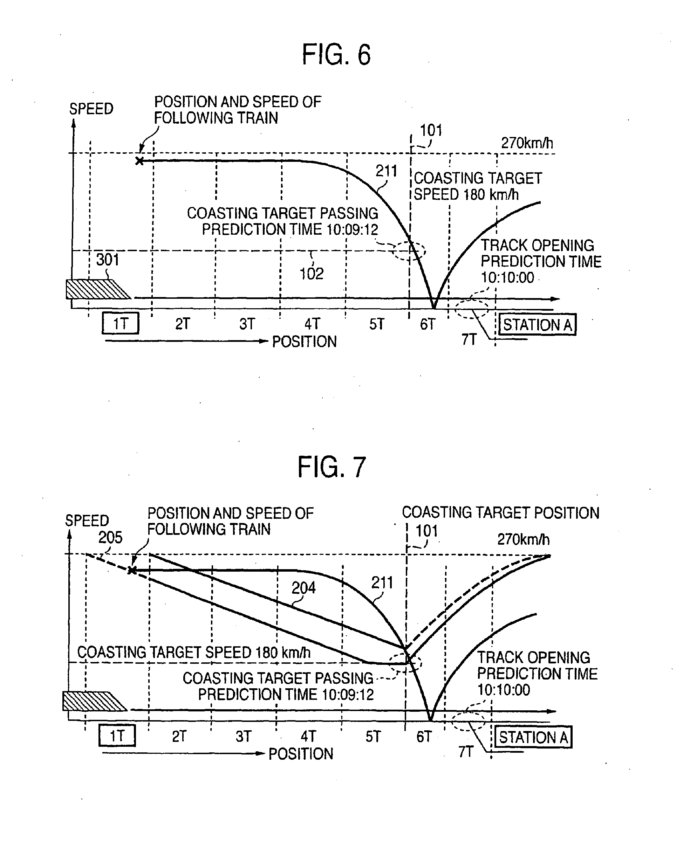

Fig. 6 is a view showing an example of a deceleration pattern of a following train in the train service control system according to Embodiment 1 of the invention.

In Fig. 6, the horizontal axis indicates position, and the vertical axis indicates speed. Track circuits 1T to 7T, a coasting target position 101, and a coasting target speed 102 are shown. A siding branches from a track at station A, and a following train 301 passes a passing rail line as shown by a thick line arrow indicating the traveling direction of the train.

Fig. 7 is a view showing an example in which an optimum coasting pattern is selected, based on a track opening prediction time according to the shunting of a preceding train, from the coasting pattern DB of the train service control system according to Embodiment 1 of the invention.

In Fig. 7, the horizontal axis indicates position, and the vertical axis indicates speed. Track circuits 1T to 7T and a coasting target position 101 are shown.

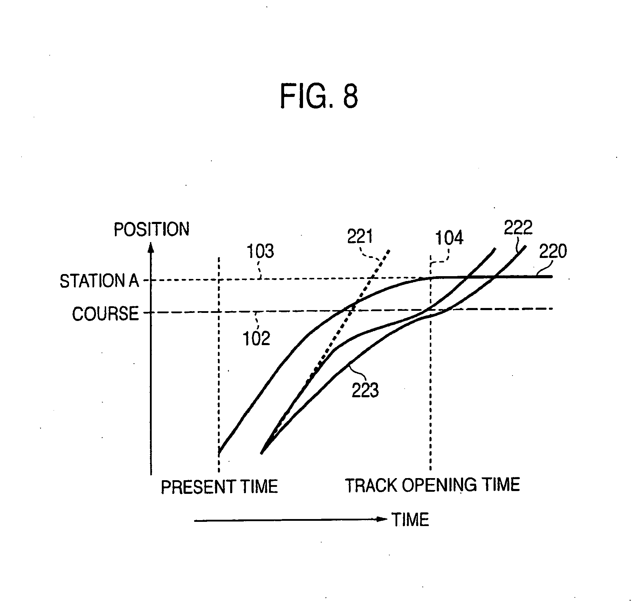

Fig. 8 is a view showing that in the train service control system according to Embodiment 1 of the invention, the time when a following train passes station A becomes early by performing the coasting control.

In Fig. 8, the horizontal axis indicates time, and the vertical axis indicates position. A coasting target speed 102 and a track opening time 104 are shown.

Next, an operation will be described.

First, a train running prediction method of the train running prediction means 13 will be described. The present position and speed of a train is estimated by the train state estimation means 12 from the drop and lifting information of a track circuit included in CTC information acquired by the CTC acquisition means 11 and based on the time when the head or tail of the train passes the boundary of the track circuit. When the present position and speed of the train are given, as disclosed in patent document 1 or the like, the train running can be predicted by simulation in accordance with the physical law from the acceleration and deceleration performance of the train, gradient information, transition information of ATC signals and ATS signals, and the like. The train running prediction means 13 carries out this operation.

Next, a creation method of coasting patterns in the coasting pattern creation means 21 will be described.

In a shunting station of an objective route, there is a track branching into a shunting rail line and a passing rail line. With respect to the track of each station, the optimum coasting target position 101 and the coasting target speed 102 are determined from conditions concerning equipment and are stored in the coasting pattern DB 22.

Next, the coasting pattern creation means 21 calculates a coasting pattern in which coasting starts from each track circuit advance end outside of the coasting target position, and after arrival at the coasting target speed, constant speed running is performed to the coasting target position. Calculation results become running curves as indicated by 201 to 209 of Fig. 2. A track circuit in which the speed reaches the coasting target speed 102 is made a coasting target track circuit.

At the same time, as indicated by 211 to 215 of Fig. 3, constant speed-deceleration patterns are also calculated in each of which running at constant speed is performed as long as possible from the start position and start speed of the coasting pattern in each track circuit, and the speed is decelerated to reach the coasting target speed 102 at the coasting target position 101, and in the case of arrival at the same coasting target position 101 and the coasting target speed 102 from the same start position and the speed, a running time increased by the running in the coasting pattern is made an increase time. A combination of the track circuit advancement speed, the coasting target track circuit, and the increase time in each pattern is stored for each track circuit as shown in Fig. 4.

Next, a selection method of coasting information in the coasting information selection means 23 will be described.

In order that a train enters a shunting rail line, in general, it is necessary to pass the branch track at low speed. The train running of the preceding train is predicted by the train running prediction means 13 as shown in Fig. 5, and the track opening prediction time (10:10:00 in Fig. 5) when the track is opened to the passing side for the following train after shunting of the preceding train in the shunting station is acquired from the prediction result. Besides, the train running of the following train is also similarly predicted by the train running prediction means 13 as show in Fig. 6, and the coasting target position passing prediction time (10:09:12 in Fig. 6) is acquired from the prediction result.

In the prediction result of Fig. 6, since it is predicted that the coasting target position passing of the following train is earlier than the track opening prediction time, the following train must be stopped once before the track. Since an early arrival time Ts as a difference between the track opening prediction time and the coasting target position passing prediction time is 48 seconds, it is appropriate that the coasting control is performed so that the coasting target position passing time is increased by 48 seconds.

A coasting pattern in which a difference between a train speed Vt in the occupied track circuit and an advancement speed Vp becomes minimum is searched from the coasting pattern DB 22, and an increase time Td is obtained. Next, a shift is sequentially made from the occupied track circuit to an inner track circuit to similarly search for the increase time, a track circuit in which the increase time Td has a value closest to the early time Ts is made a coasting start track circuit, and the coasting target track circuit of the coasting pattern and the advancement speed are obtained.

As shown in Fig. 7, in the case where the following train is present in 1T and runs at a speed of 255 km/h, the pattern 205 is searched as a suitable coasting pattern from the coasting pattern DB 22 of Fig. 4, and it is found to be appropriate to carry out the control so that the coasting is performed from 1T to 5T. As the result that other track circuits are also searched, in the case where the increase time in the coasting pattern at 1T is closest to the early arrival time, the coasting information of coasting start track circuit: 1T, coasting target track circuit: 5T, and coasting start speed: 254 km/h is obtained.

When the obtained coasting information is transmitted from the ground side by the information transmission means 24, it is received at the on-board side by the information reception means 31, and is transmitted to the automatic train control means 32. The automatic train control means 32 compares the received coasting information with the present position and speed, and when entrance is made into the section in which the coasting should be performed, the coasting is started. Besides, when the speed has already reached the coasting target speed 102, the coasting target speed is kept and the running is performed.

Fig. 8 shows a delay increase avoidance effect according to the invention. In the case where a preceding train 220 is delayed and arrives at a station A 103, in the related art, although the following train originally passes the station A 103 in accordance with a running curve 221, since the track opening time 104 is delayed, an external stop is made before the track 102 like a running curve 222, and the passing time of the station A is delayed.

On the other hand, in the invention, like a running curve 223, it becomes possible to start coasting before the track 102, and it is possible to pass the station A 103 earlier than the running curve 222.

Here, in the related art, although means for transmitting the train position and speed from the train to the ground is required, it is not required in this invention.

Besides, in the related art, since the prediction of train running is performed by the on-board apparatus, a high performance processing apparatus is required for each train, however, in the invention, it is possible to perform the prediction by one service management system.

Further, since the coasting information of the related art is time-based control information, it is necessary to achieve the time synchronization of the ground apparatus and the on-board apparatus, however, in the invention, since the position, not the time, is made a reference, the time synchronization is unnecessary.

According to Embodiment 1, as stated above, when the train schedule is disrupted, braking control of the following train due to the delay of station shunting of the preceding train is avoided, and there are effects that the following train can run efficiently and at high speed, and the delay increase can be avoided.

### Embodiment 2

In Embodiment 1, although the notch is directly controlled based on the coasting information, in Embodiment 2, coasting information display means is provided in a train to indicate coasting information to a driver, and the driver controls the train speed in accordance with the coasting information.

Since the coasting control according to this system is simple, a sufficient effect can be obtained also by this method. For example, the driver compares the received coasting information with the present position and speed, and when entrance is made into a section in which coasting should be performed, the coasting is started. Besides, when the speed has already reached the coasting target speed, the coasting target speed is kept and the running is performed.

### Modifications

In the description, although the position and speed of the preceding train and the following train are estimated from change information of the track circuit by the ground apparatus side, the position and speed information may be directly obtained from the preceding train by using communication means such as train radio.

That is in an embodiment not covered by the patent claims, a service control support on-board apparatus 3 includes train information transmission means for transmitting train position and speed information from the train, a service control support ground apparatus 2 includes train information reception means for receiving the train information on the ground, and the train position and speed is obtained from the train, instead of the train state estimation means 12. In this case, the prediction accuracy of the train running is improved as compared with the estimation from the change information of the track circuit as in Embodiment 1.

### Brief Description of the Drawings

Fig. 1 is a structural view showing a train service control system according to Embodiment 1 of the invention.
Fig. 2 is a view showing coasting patterns of a following train in the train service control system according to Embodiment 1 of the invention.
Fig. 3 is a view showing constant speed - deceleration patterns in the train service control system according to Embodiment 1 of the invention.
Fig. 4 is a view showing an example of a coasting pattern DB indicating coasting patterns in the train service control system according to Embodiment 1 of the invention.
Fig. 5 is a view showing a stop pattern of a preceding train in the train service control system according to Embodiment 1 of the invention.
Fig. 6 is a view showing an example of a deceleration pattern of a following train in the train service control system according to Embodiment 1 of the invention.
Fig. 7 is a view showing an example in which an optimum coasting pattern is selected, based on a track opening prediction time according to the shunting of a preceding train, from the coasting pattern DB of the train service control system according to Embodiment 1 of the invention.
Fig. 8 is a view showing that a time when the following train passes a station A becomes early by performing the coasting control in the train service control system according to Embodiment 1 of the invention.

### Description of Reference Numerals and Signs

- 1: service management system,
- 11: CTC information acquisition means,
- 12: train state estimation means,
- 13: train running prediction means,
- 2: service control support ground apparatus,
- 21: coasting pattern creation means,
- 22: coasting pattern DB,
- 23: coasting information selection means,
- 24: information transmission means,
- 3: service control support on-board apparatus,
- 31: information reception means,
- 32: information display means,
- 300: preceding train,
- 301: following train.

## Claims

1. A train service control system, comprising:
- a ground apparatus (2) that predicts a track opening time (104) of a station where a preceding train (300) is shunted, and transmits coasting information including section and speed information to a following train (301); and an on-board apparatus (3) that coasts a train based on the coasting information transmitted from the ground apparatus (2),
**characterized in that** the ground apparatus (2) includes:
- train state estimation means (12) for estimating a train state of a position and a speed of the shunted preceding train (300) from drop and lifting information of a track circuit (1T-7T);
- train running prediction means (13) for predicting, from the train state of the preceding train (300) estimated by the train state estimation means (12), the track opening time (104) when a track of the station where the preceding train (300) is shunted is opened to a passing side for the following train (301);
- coasting information selection means (23) for selecting, based on the track opening time (104) predicted by the train running prediction means (13), coasting information of the following train (301) from previously created coasting patterns (22) so that the following train (301) passes the track at high speed; and
information transmission means (24) for transmitting the coasting information selected by the coasting information selection means (23) to the following train (301), and
and **in that** the on-board apparatus (3) includes:
- information reception means (31) for receiving the coasting information transmitted by the information transmission means (24) of the ground apparatus (2); and
- automatic train control means (32) for coasting its train based on the coasting information received by the information reception means (31).

2. A train service control system, comprising:
- a ground apparatus (2) that predicts a track opening time (104) of a station where a preceding train (300) is shunted, and transmits coasting information including section and speed information to a following train (301); and
- an on-board apparatus (3) that indicates the coasting information transmitted from the ground apparatus (2) to a driver,
**characterized in that** the ground apparatus (2) includes:
- train state estimation means (12) for estimating a train state of a position and a speed of the shunted preceding train (300) from drop and lifting information of a track circuit (1T-7T);
- train running prediction means (13) for predicting, from the train state of the preceding train (300) estimated by the train state estimation means (12), the track opening time (104) when a track of the station where the preceding train (300) is shunted is opened to a passing side for the following train (301);
- coasting information selection means (23) for selecting, based on the track opening time (104) predicted by the train running prediction means (13), coasting information of the following train (301) from previously created coasting patterns (22) so that the following train (301) passes the track at high speed; and
information transmission means (24) for transmitting the coasting information selected by the coasting information selection means (23) to the following train (301), and
and **in that** the on-board apparatus (3) includes:
- information reception means (31) for receiving the coasting information transmitted by the information transmission means (24) of the ground apparatus (2); and
- coasting information display means for indicating the coasting information received by the information reception means (31) to the driver.

## Patentansprüche

1. Zugverkehr-Steuersystem, das folgendes aufweist:
eine am Boden vorgesehene Vorrichtung (2), die eine Gleisöffnungszeit (104) einer Station vorhersagt, in der ein vorausfahrender Zug (300) überholt wird,
und die Rollinformation, einschließlich der Abschnitts- und
Geschwindigkeitsinformation, an einen nachfolgenden Zug (301) sendet; und
eine an Bord vorgesehene Vorrichtung (3), die einen Zug auf der Basis von der von der am Boden vorgesehenen Vorrichtung (2) gesendeten Rollinformation rollen läßt,
**dadurch gekennzeichnet,**
**daß** die am Boden vorgesehene Vorrichtung (2) folgendes aufweist:
- eine Zugzustands-Schätzeinrichtung (12) zum Schätzen eines Zugzustands hinsichtlich der Position und der Geschwindigkeit des überholten vorausfahrenden Zuges (300) anhand von Abfall- und Anstiegsinformation einer Gleisschaltung (1T - 7T);
- eine Zugfahrt-Vorhersageeinrichtung (13), um aus dem von der Zugzustands-Schätzeinrichtung (12) geschätzten Zugzustand des vorausfahrenden Zuges (300) die Gleisöffnungszeit (104) vorherzusagen, wenn ein Gleis der Station, in der der vorausfahrende Zug (300) überholt wird, auf einer Durchfahrseite für den nachfolgenden Zug (301) geöffnet ist;
- eine Rollinformations-Auswähleinrichtung (23), um auf der Basis der von der Zugfahrt-Vorhersageeinrichtung (13) vorhergesagten Gleisöffnungszeit (104) Rollinformation des nachfolgenden Zuges (301) aus zuvor erzeugten Rollmustern (22) auszuwählen, so daß der nachfolgende Zug (301) das Gleis mit hoher Geschwindigkeit passiert; und
- eine Informationssendeeinrichtung (24) zum Senden der von der Rollinformations-Auswähleinrichtung (23) ausgewählten Rollinformation zu dem nachfolgenden Zug (301);
und **daß** die an Bord vorgesehene Vorrichtung (3) folgendes aufweist:
- eine Informationsempfangseinrichtung (31) zum Empfangen der von der Informationssendeeinrichtung (24) der am Boden vorgesehenen Vorrichtung (2) gesendeten Rollinformation; und
- eine automatische Zugsteuereinrichtung zum Rollen-lassen ihres Zuges auf der Basis der von der Informationsempfangseinrichtung (31) empfangenen Rollinformation.

2. Zugverkehr-Steuersystem, das folgendes aufweist:
eine am Boden vorgesehene Vorrichtung (2), die eine Gleisöffnungszeit (104) einer Station vorhersagt, in der ein vorausfahrender Zug (300) überholt wird, und die Rollinformation, einschließlich Abschnitts- und
Geschwindigkeitsinformation, an einen nachfolgenden Zug (301) sendet; und
eine an Bord vorgesehene Vorrichtung (3), die die von der am Boden vorgesehenen Vorrichtung (2) gesendete Rollinformation einem Fahrer anzeigt,
**dadurch gekennzeichnet,**
**daß** die am Boden vorgesehene Vorrichtung (2) folgendes aufweist:
- eine Zugzustands-Schätzeinrichtung (12) zum Schätzen eines Zugzustands hinsichtlich der Position und der Geschwindigkeit des überholten vorausfahrenden Zuges (300) anhand von Abfall- und Anstiegsinformation einer Gleisschaltung (1T - 7T);
- eine Zugfahrt-Vorhersageeinrichtung (13), um aus dem von der Zugzustands-Schätzeinrichtung (12) geschätzten Zugzustand des vorausfahrenden Zuges (300) die Gleisöffnungszeit (104) vorherzusagen, wenn ein Gleis der Station, in der der vorausfahrende Zug (300) überholt wird, auf einer Durchfahrseite für den nachfolgenden Zug (301) geöffnet ist;
- eine Rollinformations-Auswähleinrichtung (23), um auf der Basis der von der Zugfahrt-Vorhersageeinrichtung (13) vorhergesagten Gleisöffnungszeit (104) Rollinformation des nachfolgenden Zuges (301) aus zuvor erzeugten Rollmustern (22) auszuwählen, so daß der nachfolgende Zug (301) das Gleis mit hoher Geschwindigkeit passiert; und
- eine Informationssendeeinrichtung (24) zum Senden der von der Rollinformations-Auswähleinrichtung (23) ausgewählten Rollinformation zu dem nachfolgenden Zug (301);
und **daß** die an Bord vorgesehene Vorrichtung (3) folgendes aufweist:
- eine Informationsempfangseinrichtung (31) zum Empfangen der von der Informationssendeeinrichtung (24) der am Boden vorgesehenen Vorrichtung (2) gesendeten Rollinformation; und
- eine Rollinformations-Anzeigeeinrichtung zum Anzeigen der von der Informationsempfangseinrichtung (31) empfangenen Rollinformation für den Fahrer.

## Revendications

1. Système de contrôle de service ferroviaire, comprenant:
- un dispositif au sol (2) qui prédit un moment d'ouverture de voie (104) d'une gare où un train précédent (300) est aiguillé, et transmet des informations de marche sur l'erre comprenant des informations de section et de vitesse à un train suivant (301); et
- un dispositif embarqué (3) qui fait rouler un train sur l'erre en se basant sur les informations de marche sur l'erre transmises par le dispositif au sol (2),
**caractérisé en ce que** le dispositif au sol (2) comprend:
- des moyens d'estimation de l'état du train (12) pour estimer un état de train d'une position et une vitesse du train aiguillé précédent (300) à partir d'informations de baisse et d'élévation d'un circuit de voie (1T-7T);
- des moyens de prédiction de fonctionnement du train (13) pour prédire, à partir de l'état de train du train précédent (300) estimé par les moyens d'estimation d'état de train (12), le moment d'ouverture de la voie (104) lorsqu'une voie de la gare où le train précédent (300) est aiguillé est ouverte vers un côté de passage pour le train suivant (301);
- des moyens de sélection d'informations de marche sur l'erre (23) pour choisir, en se basant sur le moment d'ouverture de la voie (104) prédit par les moyens de prédiction de fonctionnement du train (13), les informations de marche sur l'erre du train suivant (301) à partir de modèles de marche sur l'erre créés précédemment (22), de telle sorte que le train suivant (301) passe sur la voie à grande vitesse; et
des moyens de transmission d'informations (24) pour transmettre les informations de marche sur l'erre choisies par les moyens de sélection d'informations de marche sur l'erre (23) au train suivant (301), et
**en ce que** le dispositif embarqué (3) comprend:
- des moyens de réception d'informations (31) pour recevoir les informations de marche sur l'erre transmises par les moyens de transmission d'informations (24) du dispositif au sol (2); et
- des moyens de contrôle de train automatiques (32) pour faire rouler sur l'erre son train en se basant sur les informations de marche sur l'erre reçues par les moyens de réception d'informations (31).

2. Système de contrôle de service ferroviaire, comprenant:
- un dispositif au sol (2) qui prédit un moment d'ouverture de voie (104) d'une gare où un train précédent (300) est aiguillé et transmet les informations de marche sur l'erre comprenant des informations de section et de vitesse à un train suivant (301); et
- un dispositif embarqué (3) qui indique les informations de marche sur l'erre transmises par le dispositif au sol (2) à un conducteur,
**caractérisé en ce que** le dispositif au sol (2) comprend:
- des moyens d'estimation de l'état du train (12) pour estimer un état de train d'une position et une vitesse du train aiguillé précédent (300) à partir d'informations de baisse et d'élévation d'un circuit de voie (1T-7T);
- des moyens de prédiction de fonctionnement du train (13) pour prédire, à partir de l'état de train du train précédent (300) estimé par les moyens d'estimation d'état de train (12), le moment d'ouverture de la voie (104) lorsqu'une voie de la gare où le train précédent (300) est aiguillé est ouverte vers un côté de passage pour le train suivant (301);
- des moyens de sélection d'informations de marche sur l'erre (23) pour choisir, en se basant sur le moment d'ouverture de voie (104) prédit par les moyens de prédiction de fonctionnement du train (13), les informations de marche sur l'erre du train suivant (301) à partir de modèles de marche sur l'erre créés précédemment (22) de telle sorte que le train suivant (301) passe sur la voie à grande vitesse; et
des moyens de transmission d'informations (24) pour transmettre les informations de marche sur l'erre choisies par les moyens de sélection d'informations de marche sur l'erre (23) au train suivant (301), et
**en ce que** le dispositif embarqué (3) comprend:
- des moyens de réception d'informations (31) pour recevoir les informations de marche sur l'erre transmises par les moyens de transmission d'informations (24) du dispositif au sol (2); et
- des moyens d'affichage d'informations de marche sur l'erre pour indiquer les informations de marche sur l'erre reçues par les moyens de réception d'informations (31) au conducteur.
